# EUROPEAN PATENT SPECIFICATION

(11) **EP 3 771 270 B1**
(45) Date of publication and mention of the grant of the patent: **15.03.2023**
(21) Application number: 18918118.3
(22) Date of filing: 09.05.2018
(51) Int. Cl.: H04W 72/12, H04W 72/04

(54) **UPLINK TRANSMISSION RESOURCE ALLOCATION METHOD AND APPARATUS**
VERFAHREN UND VORRICHTUNG FÜR UPLINK-ÜBERTRAGUNGSRESSOURCENZUWEISUNG
PROCÉDÉ ET APPAREIL D'ATTRIBUTION DE RESSOURCES DE TRANSMISSION EN LIAISON MONTANTE

(43) Date of publication of application: 27.01.2021
(73) Proprietor: HUAWEI TECHNOLOGIES CO., LTD., Shenzhen, Guangdong 518129 (CN)
(72) Inventor: NING, Lei, Shenzhen, Guangdong 518129 (CN); HE, Lang, Shenzhen, Guangdong 518129 (CN); ZENG, Longji, Shenzhen, Guangdong 518129 (CN); WANG, Aiying, Shenzhen, Guangdong 518129 (CN)
(74) Representative: Pfenning, Meinig & Partner mbB
(86) International application number: PCT/CN2018/086224
(87) International publication number: WO 2019/213881

(56) References cited:
- WO-A1-2017/200729
- CN-A- 104 796 994
- CN-A- 107 949 058
- HUAWEI ET AL: "Common aspects for TDD NB-IoT", 3GPP DRAFT; R1-1801439, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20180226 - 20180302 16 February 2018 (2018-02-16), XP051396935, Retrieved from the Internet: URL:http://www.3gpp.org/ftp/tsg%5Fran/WG1% 5FRL1/TSGR1%5F92/Docs/ [retrieved on 2018-02-16]
- ERICSSON: "NB-IoT - Timing Relations", 3GPP DRAFT; R1-161823 - NB-IOT - TIMING RELATIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Sophia Antipolis, FRANCE; 20160322 - 20160324 16 March 2016 (2016-03-16), XP051080941, Retrieved from the Internet: URL:http://www.3gpp.org/ftp/tsg_ran/WG1_RL 1/TSGR1_AH/LTE_NB-IoT_1603/Docs/ [retrieved on 2016-03-16]
- ERICSSON: "On the other aspects of TDD for NB-IoT", 3GPP DRAFT; R1-1717023 ON THE OTHER ASPECTS OF TDD FOR NB-IOT_90BIS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG1, no. Prague, Czech Republic; 20171009 - 20171013 8 October 2017 (2017-10-08), XP051340215, Retrieved from the Internet: URL:http://www.3gpp.org/ftp/Meetings_3GPP_ SYNC/RAN1/Docs/ [retrieved on 2017-10-08]

## Description

### TECHNICAL FIELD

This application relates to the field of communications technologies, and in particular, to an uplink transmission resource allocation method and apparatus and computer-readable storage medium.

### BACKGROUND

Internet of everything makes everything more interrelated through network connections. The development of internet of things accelerates the process of internet of everything, enables more effective collection and transmission of various information, and promotes the development of human society.

A low power wide area network (low power wide area network, LPWAN) is oriented to communication demands for a long distance and low power consumption in the internet of things, and features a long transmission distance, a large quantity of connected nodes, low power consumption of a terminal, and low operation and maintenance costs.

As one of LPWAN technologies, cellular internet of things (cellular internet of things, CIoT) is a half-duplex cellular communications system introduced in R13 by the international standards organization third generation partnership project (third generation partnership project, 3GPP), and is deployed by operators in a licensed spectrum and is widely used in internet of things services such as smart meter reading, smart parking, and health monitoring.

The application characteristic of internet of things data collection determines that terminal services are mainly uplink transmission. Efficient uplink transmission can significantly improve spectrum utilization, shorten a terminal transmission time, and reduce node power consumption.

CIoT is a half-duplex cellular communications system. When performing uplink data transmission, a terminal needs to monitor an uplink data transmission grant instruction, and state transition between listening and uplink data transmission needs to comply with a specific time constraint.

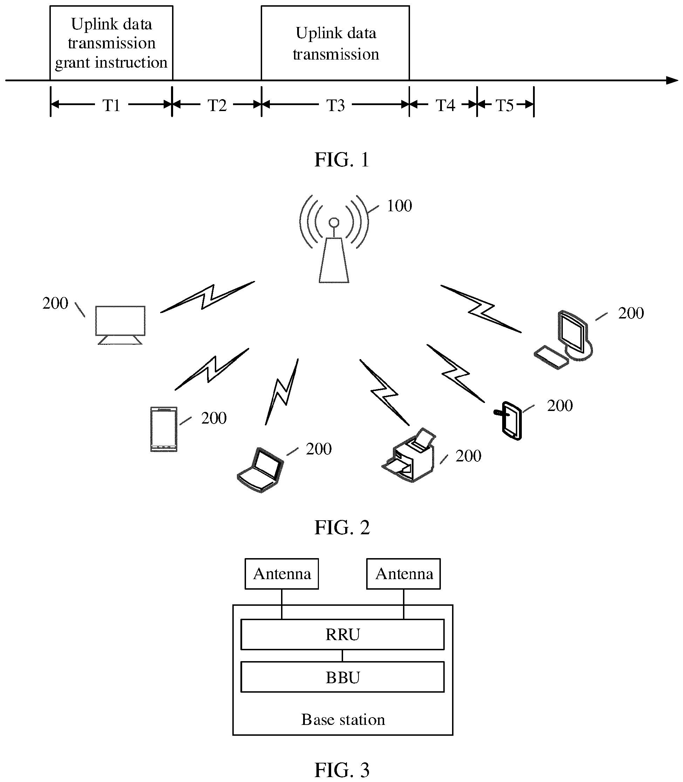

As shown in FIG. 1, T1 indicates duration of an uplink data transmission grant instruction in which a terminal monitors; T3 indicates duration of the uplink data transmission performed by the terminal; T2 and T4 are time sequence constraints for state transition between the uplink transmission and downlink transmission performed by the terminal; T1 appears periodically, so that T5 is duration of a next uplink data transmission grant instruction that the terminal waits for.

T1 to T5 constitute a time sequence constraint of each phase of the uplink data transmission of a single terminal in the half-duplex cellular communications system.

A single terminal needs to meet the preceding time sequence requirements during uplink data transmission. Therefore, when multiple terminals multiplex uplink transmission resources, unavailable resource fragments may exist, reducing an uplink peak rate of a cell.

The following references are provided:
R1: Huawei et al: "Common aspects for TDD NB-IoT", 3GPP DRAFT; R1-1801439; vol. RAN WG1, no. Athens, Greece; 20180226 - 20180302 16 February 2018 (2018-02-16), XP051396935
R2: Ericsson: "NB-IoT-Timing Relations", 3GPP DRAFT; R1-161823;vol. RANWG1, no. Sophia Antipolis, FRANCE; 20160322 - 20160324 16 March 2016 (2016-03-16), XP051080941;
R3: Ericsson: "On the other aspects of TDD for NB-IoT", 3GPP DRAFT; R1-1717023, vol. RAN WG1, no. Prague, Czech Republic, 20171009-20171013 8 October 2017 (2017-10-08), XP051340215;
R1 discusses TDD configurations in NB-IoT and proposes to schedule NPDSCH and NPDCCH on the same carrier. R2 discusses NB-IoT timing relations and associated HARQ processes. R3 proposes multi-carrier support for NB-IoT.

### SUMMARY

The invention is set out in the appended claims. Embodiments of this application provide an uplink transmission resource allocation method and apparatus, to reduce resource fragments of an uplink transmission resource, increase an uplink peak rate of a cell, improve spectrum utilization, and reduce node power consumption.

To achieve the foregoing objectives, the following technical solutions are used in the embodiments of this application.

According to a first aspect, this application provides an uplink transmission resource allocation method and apparatus.

The method includes: determining uplink data transmission grant instruction duration, first state transition duration, and duration of first uplink data transmission; and determining a target subcarrier based on the uplink data transmission grant instruction duration, the first state transition duration, and the duration of the first uplink data transmission, where the target subcarrier is an available subcarrier with a minimum difference between a start slot of uplink data transmission duration and an end slot of an allocated resource on an available subcarrier, and the available subcarrier is a subcarrier whose resource within the uplink data transmission duration is an idle resource. In the method, the available subcarrier with the minimum difference between the start slot of the uplink data transmission duration and the end slot of the allocated resource on the available subcarrier is determined as the target subcarrier. In a possible design, a resource is allocated to a user on the target subcarrier, which can reduce resource fragments of an uplink transmission resource and increase an uplink peak rate of a cell.

In a possible design, before the duration of the first uplink data transmission is determined, a quantity of subframes of the first uplink data transmission is determined based on a user buffer status report; and the duration of the first uplink data transmission is determined based on the quantity of subframes of the first uplink data transmission.

In a possible design, if it is determined that no target subcarrier exists, second state transition duration is determined; and the target subcarrier is determined based on the uplink data transmission grant instruction duration, the second state transition duration, and the duration of the first uplink data transmission. In the method, if the target subcarrier cannot be determined for the user based on current state transition duration, a value of state transition duration is re-determined, and an uplink transmission resource is attempted to be allocated to the user, so that the uplink transmission resource is successfully allocated to the user as much as possible, thereby reducing resource fragments of the uplink transmission resource and increasing the uplink peak rate of the cell.

In a possible design, if it is determined that no target subcarrier exists, a quantity of subframes of second uplink data transmission is redetermined as a quantity of subframes of uplink data transmission, where the quantity of subframes of the second uplink data transmission is equal to the quantity of subframes of the first uplink data transmission minus 1, and the quantity of subframes of the first uplink data transmission is an integer greater than 1; duration of the second uplink data transmission is determined based on the quantity of subframes of the second uplink data transmission; third state transition duration is re-determined as the state transition duration, where the third state transition duration is an initial value of the state transition duration; and the target subcarrier is determined based on the uplink data transmission grant instruction duration, the third state transition duration, and the duration of the second uplink data transmission. In the method, if the target subcarrier cannot be determined for the user based on current uplink data transmission duration, the quantity of subframes of uplink data transmission is reduced, and a value of the uplink data transmission duration is re-determined. An uplink transmission resource is attempted to be allocated to the user, so that the uplink transmission resource is successfully allocated to the user as much as possible, thereby reducing resource fragments of the uplink transmission resource and increasing the uplink peak rate of the cell. In addition, because the value of the uplink data transmission duration is re-determined, optional state transition duration restricted by a protocol may be re-traversed. For example, the initial value of the state transition duration is determined as the state transition duration, and the initial value of the state transition duration is a smallest value in the optional state transition duration. In this way, resource fragments of the uplink transmission resource can be reduced.

In a possible design, a quantity of available subcarriers are determined based on the uplink data transmission grant instruction duration, the first state transition duration, and the duration of the first uplink data transmission; and the target subcarrier is determined from the available subcarriers.

In a possible design, that it is determined that no target subcarrier exists specifically includes: determining that the quantity of available subcarriers is 0.

In a possible design, after the determining a target subcarrier, an uplink data transmission grant instruction is sent to user equipment, the uplink data transmission grant instruction includes the uplink data transmission grant instruction duration, the state transition duration, uplink data transmission duration indication information, and the corresponding target subcarrier, where the uplink data transmission duration indication information is used to determine the uplink data transmission duration.

Correspondingly, this application further provides an uplink transmission resource allocation apparatus, and the apparatus may implement the uplink transmission resource allocation method according to the first aspect. For example, the apparatus may be a network device or a chip applied to the network device, or may be another apparatus that can implement the foregoing uplink transmission resource allocation method. The apparatus may implement the foregoing method by using software, hardware, or hardware executing corresponding software.

In a possible design, the apparatus may include a processor and a memory. The processor is configured to support the apparatus in performing a corresponding function in the method according to the first aspect. The memory is configured to be coupled to the processor, and store a program instruction and data that are necessary for the apparatus. In addition, the apparatus may further include a communications interface. The communications interface is configured to support communication between the apparatus and another apparatus. The communications interface may be a transceiver or a transceiver circuit.

The apparatus includes a determining module. The determining module is configured to determine uplink data transmission grant instruction duration, first state transition duration, and duration of first uplink data transmission; the determining module is further configured to determine a target subcarrier based on the uplink data transmission grant instruction duration, the first state transition duration, and the duration of the first uplink data transmission, where the target subcarrier is an available subcarrier with a minimum difference between a start slot of uplink data transmission duration and an end slot of an allocated resource on an available subcarrier, and the available subcarrier is a subcarrier whose resource within the uplink data transmission duration is an idle resource.

In a possible design, the determining module is further configured to: before the determining duration of first uplink data transmission, determine a quantity of subframes of the first uplink data transmission according to a user buffer status report; and the determining module is further specifically configured to determine the duration of the first uplink data transmission based on the quantity of subframes of the first uplink data transmission.

In a possible design, the determining module is further configured to: determine whether the target subcarrier exists; if it is determined that no target subcarrier exists, determine second state transition duration; and determine the target subcarrier based on the uplink data transmission grant instruction duration, the second state transition duration, and the duration of the first uplink data transmission.

In a possible design, the determining module is further configured to: if it is determined that no target subcarrier exists, determine duration of second uplink data transmission based on a quantity of subframes of the second uplink data transmission; determine third state transition duration, where the quantity of subframes of the second uplink data transmission is equal to the quantity of subframes of the first uplink data transmission minus 1, and the quantity of subframes of the first uplink data transmission is an integer greater than 1, and the third state transition duration is an initial value of state transition duration; and determine the target subcarrier based on the uplink data transmission grant instruction duration, the third state transition duration, and the duration of the second uplink data transmission.

In a possible design, the determining module determines a quantity of available subcarriers based on the uplink data transmission grant instruction duration, the first state transition duration, and the duration of the first uplink data transmission, and determines the target subcarrier from the available subcarriers.

In a possible design, that the determining module determines that no target subcarrier exists includes: determining that the quantity of the available subcarriers is 0.

In a possible design, the apparatus further includes a sending module. The sending module is configured to send an uplink data transmission grant instruction to user equipment after the determining module determines the target subcarrier, where the uplink data transmission grant instruction includes the uplink data transmission grant instruction duration, the state transition duration, uplink data transmission duration indication information, and the corresponding target subcarrier, where the uplink data transmission duration indication information is used to determine the uplink data transmission duration.

This application further provides a computer-readable storage medium. The computer-readable storage medium stores an instruction. When the instruction runs in a computer, the computer is enabled to perform the method according to any one of the foregoing aspects.

This application further provides a computer program product including an instruction. When the computer program product runs in a computer, the computer is enabled to perform the method according to any one of the foregoing aspects.

This application further provides a chip system. The chip system includes a processor, and may further include a memory, configured to implement the method according to any one of the foregoing aspects.

This application provides a communications system, including the foregoing apparatus configured to implement the uplink transmission resource allocation method according to the first aspect.

Any apparatus, computer storage medium, computer program product, chip system, or communications system provided above is configured to perform the corresponding method provided above. Therefore, beneficial effects that can be achieved by the apparatus, computer storage medium, computer program product, chip system, or communications system provided above, refer to beneficial effects of a corresponding solution in the corresponding method provided above. Details are not described herein again.

### BRIEF DESCRIPTION OF DRAWINGS

FIG. 1 is a schematic diagram of a time sequence constraint of each phase of uplink data transmission of a single terminal in a half-duplex cellular communications system;
FIG. 2 is a schematic diagram of a system architecture to which technical solutions provided in embodiments of this application are applicable;
FIG. 3 is a schematic structural diagram of a network device to which technical solutions provided in the embodiments of this application are applicable;
FIG. 4A and FIG. 4B are schematic diagrams of an uplink transmission resource allocation method according to an embodiment of this application;
FIG. 5 is a schematic diagram 1 of an uplink transmission resource allocation apparatus according to an embodiment of this application;
FIG. 6 is a schematic diagram 2 of an uplink transmission resource allocation apparatus according to an embodiment of this application; and
FIG. 7 is a schematic diagram 3 of an uplink transmission resource allocation apparatus according to an embodiment of this application.

### DESCRIPTION OF EMBODIMENTS

The following describes in detail an uplink transmission resource allocation method and apparatus provided in the embodiments of this application with reference to the accompanying drawings.

The technical solutions provided in this application may be applied to various half-duplex communications systems, for example, a current 4G communications system, a future evolved network such as a 5G communications system, a long term evolution (long term evolution, LTE) system, a cellular system related to the third generation partnership project (third generation partnership project, 3GPP), various communication convergence systems, and the like. In particular, the technical solutions may be applied to a CIoT system, for example, a narrowband internet of things (Narrowband Internet of Thing, NB-IoT) system complying with a 3GPP specification. A plurality of application scenarios may be included, for example, including scenarios such as machine to machine (machine to machine, M2M), device to machine (device to machine, D2M), macro-micro communication, enhanced mobile broadband (enhance mobile broadband, eMBB), ultra-reliable low-latency communication (ultra reliable & low latency communication, uRLLC) and massive machine-type communication (massive machine type communication, mMTC). These scenarios may include but are not limited to: a scenario of communication between user equipment (user equipment, UE) and UE, a scenario of communication between network devices, a scenario of communication between a network device and UE, and the like.

The technical solutions provided in the embodiments of this application may be applied to a system architecture shown in FIG. 2. The system architecture may include a network device 100 and one or more UEs 200 connected to the network device 100.

The network device 100 may be a device that can communicate with the UE 200. The network device 100 may be a relay station, an access point, or the like. The network device 100 may be an eNB (evolutional NodeB) or an eNodeB in LTE. The network device 100 may also be a radio controller in a cloud radio access network (cloud radio access network, CRAN) scenario. The network device 100 may also be a network device in a future 5G network or a network device in a future evolved network, or may be a wearable device, vehicle-mounted device, or the like.

The UE 200 may be an internet of things terminal, an access terminal, a UE unit, a UE station, a mobile station, a mobile console, a remote station, a remote terminal, a mobile device, a UE terminal, a terminal, a wireless communications device, a UE agent, a UE apparatus, or the like. The internet of things terminal implements functions of collecting data and sending data to the network device 100, and is responsible for multiple functions such as data collection, preliminary processing, encryption, and transmission. The internet of things terminal may be a shared bicycle, a water meter, an electricity meter, a street lamp, a fire alarm, and a manhole cover. The access terminal may be a cellular phone, a cordless phone, a session initiation protocol (session initiation protocol, SIP) phone, a wireless local loop (wireless local loop, WLL) station, a personal digital assistant (personal digital assistant, PDA), a hand-held device with a wireless communication function, a computing device, another processing device connected to a wireless modem, a vehicle-mounted device, a wearable device, a terminal in the future 5G network, a terminal in the future evolved network, or the like.

It should be noted that the system architecture shown in FIG. 2 is merely used as an example, and is not intended to limit the technical solutions in this application. A person skilled in the art should understand that, in a specific implementation process, the system architecture may further include another device, and the network device 100 and the UE 200 may also be configured based on a specific requirement.

The uplink transmission resource allocation method and apparatus provided in the embodiments of this application may be applied to a network device. In an example, the network device 100 is a base station and a general hardware architecture of the network device 100 is described. As shown in FIG. 3, a base station may include a building baseband unit (building baseband unit, BBU) and a remote radio unit (remote radio unit, RRU). The RRU is connected to an antenna feeder system (that is, an antenna). The BBU and the RRU may be disassembled for use as required. It should be noted that in a specific implementation process, the network device 100 may also use another general hardware architecture, which is not limited to the general hardware architecture shown in FIG. 3. In the embodiments of this application, a specific structure of an entity that performs the uplink transmission resource allocation method is not particularly limited in the embodiments of this application, provided that a program that records code of the uplink transmission resource allocation method in the embodiments of this application can be run to perform communication according to the uplink transmission resource allocation method in the embodiments of this application. For example, the uplink transmission resource allocation method provided in the embodiments of this application may be performed by a base station, or may be performed by a function module that is in the base station and that can invoke and execute the program, or may be performed by an uplink transmission resource allocation apparatus applied to the base station, for example, a chip. This is not limited in this application. In this specification, an example in which the base station performs the foregoing uplink transmission resource allocation method is used for description.

The following explains and describes some terms in this application, to help a reader have a better understanding.
1. Uplink data transmission grant instruction duration, state transition duration, and uplink data transmission duration

In a half-duplex communications system, a base station periodically sends an uplink data transmission grant instruction to UE, and the UE obtains time domain and frequency domain resources of uplink data transmission by listening to the uplink data transmission grant instruction. Time for uplink data transmission by UE is determined based on an uplink data transmission grant instruction received by the UE. Specifically, the uplink data transmission grant instruction includes uplink data transmission grant instruction duration T1, state transition duration, and indication information of uplink data transmission duration T3, and the state transition duration may include state transition duration 1 T2 and state transition duration 2 T4, the indication information of the uplink data transmission duration T3 is used to determine T3. For single UE, T1, T2, T3, T4, and T5 meet time sequence requirements shown in FIG. 1. The UE may determine, based on a moment at which the uplink data transmission grant instruction is monitored, T1, and T2, a start moment at which the UE performs the uplink data transmission; with reference to the start moment of the uplink data transmission, the UE may determine, based on T3, an end moment for performing the uplink data transmission.

### 2. Uplink transmission resource

The base station and the UE may perform data transmission by using an air interface resource. The air interface resource may include a time domain resource and a frequency domain resource, and the time domain resource and the frequency domain resource may also be referred to as a time-frequency resource. A direction in which the base station sends signaling and data to the UE is generally referred to as a downlink, and a direction in which the UE sends signaling and data to the base station is generally an uplink. An uplink time-frequency resource in the air interface resource is an uplink transmission resource. Each UE occupies the uplink transmission resource when performing uplink data transmission. The base station needs to properly allocate an independent uplink transmission resource to each UE, so that different UEs can multiplex the uplink transmission resource. In this application, the uplink transmission resource may be a subcarrier. On each subcarrier, different UEs multiplex time-frequency resources of the subcarrier.

3. The term "a plurality of" in this specification means two or more. Terms such as "first" and "second" in this specification are used to distinguish between different objects, but are not used to describe a specific order of the objects. For example, "first state transition duration" and "second state transition duration" are used to distinguish between different state transition duration, instead of describing a specific order of the state transition duration. The term "and/or" in this specification describes only an association relationship for describing associated objects and represents that three relationships may exist. For example, A and/or B may represent the following three cases: only A exists, both A and B exist, and only B exists.

In the embodiments of this application, a word or phrase such as "example" or "for example" is used to represent an example, an illustration, or a description. Any embodiment or design scheme described as "example" or "for example" in the embodiments of this application should not be explained as being more preferred or having more advantages than another embodiment or design scheme. Exactly, using the word or phrase such as "example" or "for example" is intended to present a relative concept in a specific manner.

As described above, on each subcarrier, different UEs multiplex the time-frequency resources of the subcarrier. When allocating an uplink transmission resource to each UE, the base station needs to ensure that the uplink transmission resource allocated to the UE is not occupied by another UE. Because a time sequence of uplink data transmission performed by the UE needs to meet the time sequence constraint shown in FIG. 1, when multiple UEs multiplex a subcarrier, there may be resource fragments that cannot be used. When the base station allocates an uplink transmission resource to UE, if resource fragments can be reduced as much as possible, spectrum utilization can be improved and an uplink peak rate of a cell can be increased. In the embodiments of this application, an example in which the base station performs the foregoing uplink transmission resource allocation method is used for description. For example, in the embodiments, the base station receives a user buffer status report sent by UE 1, and the base station schedules the UE 1, needs to allocate an uplink data transmission resource to the UE 1, and notifies, by using an uplink data transmission grant instruction, the UE 1 of the uplink data transmission resource allocated to the UE 1.

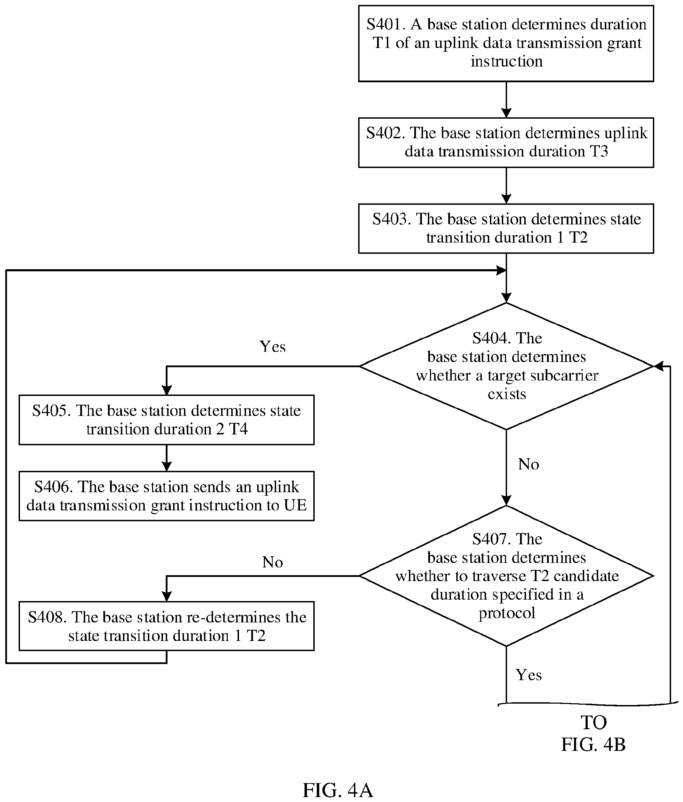

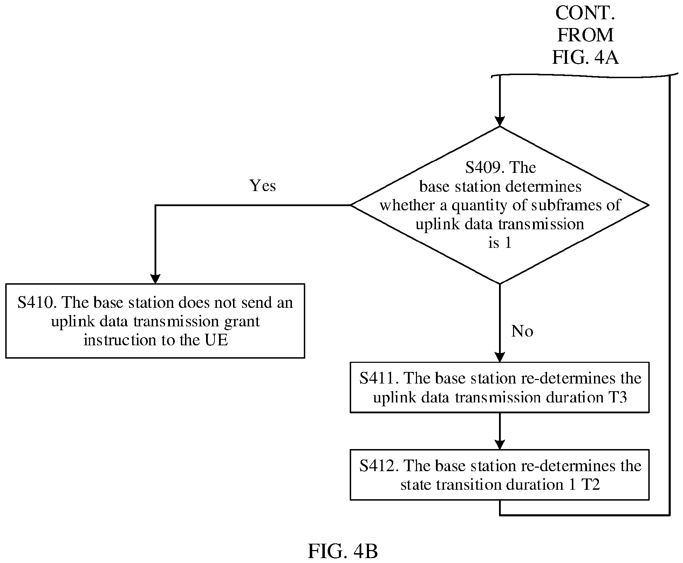

An embodiment of this application provides an uplink transmission resource allocation method, and the method may be applied to the communications system shown in FIG. 2. The uplink transmission resource allocation method provided in this embodiment of this application can reduce resource fragments and increase an uplink peak rate of a cell. As shown in FIG. 4A and FIG. 4B, the method may include S401 to S412.

S401. Abase station determines duration T1 of an uplink data transmission grant instruction.

Optionally, the duration T1 of the uplink data transmission grant instruction may be pre-configured on the base station. For example, duration of the uplink data transmission grant instruction is pre-configured to 1 ms. The base station may determine the value of T1 according to a pre-configured value.

Optionally, before determining T1, the base station further determines a sending moment of the uplink data transmission grant instruction. For example, in NB-IoT, the base station periodically sends the uplink data transmission grant instruction to UE according to preset duration. For example, if the preset duration is 16 ms, the base station sends the uplink data transmission grant instruction to the UE every 16 ms. The base station may determine, based on a moment at which the uplink data transmission grant instruction is sent to UE 1 last time and the preset duration, a sending moment at which the uplink data transmission grant instruction is sent to the UE 1 this time, for example, a start slot for sending the uplink data transmission grant instruction.

S402. The base station determines uplink data transmission duration T3.

Optionally, if UE has to-be-sent uplink data, the UE sends a user buffer status report to the base station, where the user buffer status report includes a data volume of the to-be-sent uplink data of the UE. The base station receives the user buffer status report sent by the UE, and obtains the data volume of the to-be-sent uplink data of the UE.

The base station determines a quantity of subframes of first uplink data transmission based on the data volume of the to-be-sent uplink data of the UE in the user buffer status report and a protocol constraint.

For example, Table 1 lists a transport block size (Transport block size, TBS) configuration of a narrowband physical uplink shared channel (Narrowband Physical Uplink Shared Channel, NPUSCH) in the NB-IoT 3GPP R13 protocol.

I_{TBS} indicates a TBS index. Generally, a larger value of an I_{TBS} row index indicates better channel quality of UE. For example, in a cell peak scenario, a maximum index value is used as the I_{TBS} row index of all UEs; the numbers in the table indicate data volumes of uplink data in the unit of bit; an I_{TBS} value corresponds to an I_{TBS} column index, and I_{RU} indicates a quantity of subframes. I_{TBS} column indexes {0, 1, 2, 3, 4, 5, 6, 7} correspond to I_{RU} values {1, 2, 3, 4, 5, 6, 8, 10} respectively.

For example, the base station receives the user buffer status report sent by the UE, where the data volume of the to-be-sent uplink data of the UE is 900 bits; in a cell peak scenario, the I_{TBS} row index value is 12, a minimum value greater than 900 is 1000 in a row whose I_{TBS} row index is 12, and a corresponding I_{TBS} column index is 3. In this case, it may be determined that a corresponding quantity of subframes is 4, that is, it is determined that the quantity of subframes of the first uplink data transmission is 4. It should be noted that, if the base station does not obtain the user buffer status report sent by the UE when determining the quantity of subframes of the uplink data transmission, the base station may determine a default quantity of subframes of the uplink data transmission according to an actual situation. For example, it may be determined that an I_{TBS} column index is 0, and a corresponding quantity of subframes is 1.

Further, the base station determines duration of the first uplink data transmission based on the quantity of subframes of the first uplink data transmission. T3 is the duration of the first uplink data transmission, and the duration of the first uplink data transmission is equal to the quantity of subframes of the first uplink data transmission multiplied by single-subframe transmission duration.

Optionally, when the base station allocates a subcarrier time-frequency resource to the UE, single UE may occupy a frequency domain resource of one or more subcarriers. For example, in an NB-IoT system, a quantity of subcarriers is 12, a quantity of subcarriers that can be occupied by single UE is { 1, 3, 6, 12}, and corresponding single-subframe transmission duration is {8 ms, 4 ms, 2 ms, 1 ms} respectively. For example, if single UE performs single-carrier transmission, that is, the single UE occupies a frequency domain resource of one subcarrier, single-subframe transmission duration is 8 ms. T3=4*8 ms.

**Table 1**

| I_{TBS} | I_{RU} | | | | | | | |
|---|---|---|---|---|---|---|---|---|
| | 0 | 1 | 2 | 3 | 4 | 5 | 6 | 7 |
| 0 | 16 | 32 | 56 | 88 | 120 | 152 | 208 | 256 |
| 1 | 24 | 56 | 88 | 144 | 176 | 208 | 256 | 344 |
| 2 | 32 | 72 | 144 | 176 | 208 | 256 | 328 | 424 |
| 3 | 40 | 104 | 176 | 208 | 256 | 328 | 440 | 568 |
| 4 | 56 | 120 | 208 | 256 | 328 | 408 | 552 | 680 |
| 5 | 72 | 144 | 224 | 328 | 424 | 504 | 680 | 872 |
| 6 | 88 | 176 | 256 | 392 | 504 | 600 | 808 | 1000 |
| 7 | 104 | 224 | 328 | 472 | 584 | 712 | 1000 | |
| 8 | 120 | 256 | 392 | 536 | 680 | 808 | | |
| 9 | 136 | 296 | 456 | 616 | 776 | 936 | | |
| 10 | 144 | 328 | 504 | 680 | 872 | 1000 | | |
| 11 | 176 | 376 | 584 | 776 | 1000 | | | |
| 12 | 208 | 440 | 680 | 1000 | | | | |

S403. The base station determines state transition duration 1 T2.

Optionally, the base station determines a value of the state transition duration 1 T2 according to a protocol constraint. For example, in an NB-IoT system, T2 candidate duration specified in the 3GPP protocol is {8 ms, 16 ms, 32 ms, 64 ms}.

Optionally, the base station determines that the value of T2 is first state transition duration. For example, the base station determines a minimum value in the T2 candidate duration specified in the 3GPP protocol as the first state transition duration. For example, a minimum value 8 ms in {8 ms, 16 ms, 32 ms, 64 ms} is selected as the first state transition duration. It should be noted that, in specific implementation, relatively small state transition duration is generally selected, so that uplink transmission resources can be saved.

S404. The base station determines whether a target subcarrier exists. If it is determined that the target subcarrier exists, S405 is performed; if it is determined that no target subcarrier exists, S407 is performed.

Optionally, the base station determines the target subcarrier based on the uplink data transmission grant instruction duration, the first state transition duration, and the duration of the first uplink data transmission.

Optionally, the base station determines a quantity of available subcarriers based on the uplink data transmission grant instruction duration, the first state transition duration, and the duration of the first uplink data transmission, where the available subcarrier is a subcarrier whose resource within the uplink data transmission duration is an idle resource. Specifically, the base station may determine a start slot for the uplink data transmission, that is, a start slot of the uplink data transmission duration T3 based on the start slot in which the uplink data transmission grant instruction is sent to the UE 1, T1, and T2, and determine an end slot for the uplink data transmission based on the start slot of T3 and the uplink data transmission duration T3. If a resource of a subcarrier in the uplink data transmission duration (between the start slot of the uplink data transmission and the end slot of the uplink data transmission) is not occupied by another UE and is a space resource, it is determined that the subcarrier is an available subcarrier. The base station traverses the subcarriers to determine a quantity of available subcarriers.

Further, the base station determines that the target subcarrier is an available subcarrier with a minimum difference between the start slot of the uplink data transmission duration and an end slot of an allocated resource on the available subcarrier. Optionally, if differences between the start slot of the uplink data transmission duration and end slots of allocated resources on a plurality of available subcarriers are equal, and the differences are less than differences between the start slot of the uplink data transmission duration and end slots of allocated resources on remaining available subcarriers, the base station may randomly select any one of the plurality of available subcarriers whose differences are equal as the target subcarrier.

For example, in an NB-IoT system, the base station has 12 subcarriers: subcarrier 1, subcarrier 2, subcarrier 3, subcarrier 4, subcarrier 5, subcarrier 6, a subcarrier 7, subcarrier 8, subcarrier 9, and subcarrier 10, subcarrier 11 and subcarrier 12.

In an implementation, single UE occupies a time-frequency resource of one subcarrier. The base station determines that a start slot for sending the uplink data transmission grant instruction to the UE1 is T, T1 is 1 ms, T2 is 8 ms, and T3=4*8 ms=32 ms. The base station traverses 12 subcarriers, and determines that a subcarrier whose start slot is T+1 ms+8 ms and whose end slot is within T+1 ms+8 ms+32 ms and that is an idle resource is an available subcarrier. For example, subcarrier 1, subcarrier 3, subcarrier 8, and subcarrier 12 are determined as available subcarriers. The base station determines a subcarrier with a minimum difference between a slot (T+1 ms+8 ms) in the subcarrier 1, the subcarrier 3, the subcarrier 8, and the subcarrier 12 and an end slot of an allocated resource on the subcarrier as the target subcarrier.

In another implementation, single UE occupies time-frequency resources of a plurality of subcarriers. For example, single UE occupies time-frequency resources of three subcarriers. Subcarriers 1, 2, and 3 belong to subcarrier group 1; subcarriers 4, 5, and 6 belong to subcarrier group 2; subcarriers 7, 8, and 9 belong to subcarrier group 3; and subcarrier 10, subcarrier 11 and subcarrier 12 belong to subcarrier group 4. The base station determines that a start slot for sending the uplink data transmission grant instruction to the UE1 is T, T1 is 1 ms, T2 is 8 ms, and T3=4*4 ms=16 ms. The base station traverses the 4 subcarriers group, and determines that a subcarrier in a subcarrier group whose start slot is T+1 ms+8 ms and whose end slot is T+1 ms+8 ms+16 ms and that is an idle resource is an available subcarrier. For example, the base station determines that subcarriers 1, 2, 3 in subcarrier group 1 and subcarriers 10, 11, 12 in subcarrier group 4 are available subcarriers. The base station compares a difference between a slot (T+1 ms+8 ms) and an end slot of an allocated resource in the subcarrier group 1, and a difference between a slot (T+1 ms+8 ms) and an end slot of an allocated resource in the subcarrier group 4. For example, if the difference between the slot (T+1 ms+8 ms) and the end slot of the allocated resource in the subcarrier group 1 is less than the difference between the slot (T+1 ms+8 ms) and the end slot of the allocated resource in the subcarrier group 4, it is determined that the subcarriers 1, 2, and 3 in the subcarrier group 1 are target subcarriers.

In specific implementation, the quantity of subcarriers of the base station may not be 12, and single UE may further occupy 6 subcarriers or time-frequency resources of 12 subcarriers. This embodiment of this application provides only an example for description. The quantity of subcarriers of the base station and the quantity of subcarriers occupied by the single UE are not limited in this application.

Further, if it is determined that the target subcarrier exists, S405 is performed; if it is determined that the target subcarrier does not exist, for example, if it is determined that the quantity of available subcarriers is 0, S407 is performed.

S405. The base station determines state transition duration 2 T4.

Optionally, the base station determines the state transition duration 2 T4 according to a protocol constraint. For example, in an NB-IoT system, T4 specified in the 3GPP protocol is 3 ms.

S406. The base station sends an uplink data transmission grant instruction to the UE.

Optionally, the base station periodically sends the uplink data transmission grant instruction to the UE. For example, a period of sending the uplink data transmission grant instruction is 16 ms. The uplink data transmission grant instruction includes the uplink data transmission grant instruction duration T1, the state transition duration 1 T2, the state transition duration 2 T4, uplink data transmission duration indication information, and the corresponding target subcarrier, where the uplink data transmission duration indication information is used to determine the uplink data transmission duration T3. For example, the uplink data transmission duration indication information may include a quantity of subframes of uplink data transmission and a quantity of subcarriers occupied by single UE.

After receiving the uplink data transmission grant instruction, the UE may determine the uplink data transmission duration T3 based on the uplink data transmission duration indication information. For example, in the uplink data transmission grant instruction, the quantity of subframes of the uplink data transmission is 4, and quantity of subcarriers occupied by the single UE is 1. According to a protocol specification, when the single UE occupies one subcarrier, single-subframe transmission duration is 8 ms. The UE can determine that T3= 4*8 ms=32 ms.

A time-frequency resource for performing uplink data transmission may be determined based on the sending moment of the uplink data transmission grant instruction, T1, T2, T3, T4, and the target subcarrier.

S407. The base station determines whether to traverse T2 candidate duration specified in a protocol. If the T2 candidate duration is not traversed, S408 is performed; if the T2 candidate duration has been traversed, S409 is performed.

For example, in an NB-IoT system, T2 candidate duration specified in the 3GPP protocol is {8 ms, 16 ms, 32 ms, 64 ms}. If a current value of T2 is the first state transition duration, for example, T2 is 8 ms, or the value of T2 may be 16 ms, 32 ms, or 64 ms, the T2 candidate duration is not traversed.

S408. The base station re-determines the state transition duration 1 T2. Then, S404 continues to be performed.

Optionally, the base station determines that the value of T2 is second state transition duration. For example, the 3GPP protocol specifies that T2 candidate duration is {8 ms, 16 ms, 32 ms, 64 ms}, and a current value of T2 is the first state transition duration, for example, T2 is 8 ms; the base station re-determines that the value of T2 is the second state transition duration, for example, determines that T2 is 16 ms based on an ascending order of T2 candidate duration values.

S409. The base station determines whether the quantity of subframes of the uplink data transmission is 1. If the quantity of subframes of the uplink data transmission is 1, S410 is performed; if the quantity of subframes of the uplink data transmission is not 1, that is, the quantity of subframes of the uplink data transmission is greater than 1, S411 is performed.

S410. The base station does not send an uplink data transmission grant instruction to the UE.

Specifically, the base station fails to allocate an uplink data transmission resource and does not send the uplink data transmission grant instruction to the UE.

S411. The base station re-determines the uplink data transmission duration T3.

Specifically, the base station re-determines the quantity of subframes of the uplink data transmission, and determines a value of T3 based on the new quantity of subframes of the uplink data transmission.

For example, the current quantity of subframes of the uplink data transmission is the quantity of subframes of the first uplink data transmission, and the quantity of subframes of the first uplink data transmission is 4. A quantity of subframes of second uplink data transmission may be re-determined as the quantity of subframes of the uplink data transmission, where the quantity of subframes of the second uplink data transmission is equal to the quantity of subframes of the first uplink data transmission minus 1, that is, the quantity of subframes of the second uplink data transmission is 3.

The base station determines, based on the quantity of subframes of the second uplink data transmission, that the value of T3 is the duration of the second uplink data transmission. The duration of the second uplink data transmission is equal to the quantity of subframes of the second uplink data transmission multiplied by single-subframe transmission duration.

For example, in an NB-IoT system, a quantity of subcarriers is 12, a quantity of subcarriers that can be occupied by single UE is {1, 3, 6, 12}, and corresponding single-subframe transmission duration is {8 ms, 4 ms, 2 ms, 1 ms}. For example, if single UE performs single-carrier transmission, that is, the single UE occupies a frequency domain resource of one subcarrier, single-subframe transmission duration is 8 ms. T3=3*8 ms.

S412. The base station re-determines the state transition duration 1 T2. Then, S404 continues to be performed.

Optionally, the base station re-determines the value of the state transition duration T2 according to a protocol constraint. Optionally, because the base station re-determines the quantity of subframes of the uplink data transmission in S411, and re-determines the value of T3 based on the newly determined quantity of subframes of the uplink data transmission, the base station re-determines the value of T2 as the initial value of the state transition duration. For example, after the re-determining, the value of T2 is third state transition duration, and the third state transition duration is the initial value of the state transition duration.

For example, in an NB-IoT system, T2 candidate duration specified in the 3GPP protocol is {8 ms, 16 ms, 32 ms, 64 ms}. The base station selects the value of T2 based on the ascending order of the T2 candidate duration values. Therefore, the base station determines that the value of T2 is the initial value 8 ms of the state transition duration.

In the uplink transmission resource allocation method according to this embodiment of this application, when an uplink transmission resource is allocated to UE, a subcarrier with a minimum idle fragment resource is selected, and the uplink transmission resource is successfully allocated to the UE as much as possible by reducing a quantity of subframes for current uplink transmission resource allocation. Compared with a method in a current technology in which an uplink transmission resource is allocated to UE by randomly selecting a subcarrier that has an idle resource and resource allocation fails if there is no available subcarrier, the uplink transmission resource allocation method provided in this embodiment of this application can reduce idle fragment resources on a subcarrier, increase an uplink peak rate of a cell, improve spectrum utilization, and reduce node power consumption.

The foregoing mainly describes the solutions provided in the examples of this application from a perspective of the base station. It may be understood that, to implement the foregoing functions, the base station includes a corresponding hardware structure and/or software module for performing each of the functions. A person skilled in the art should easily be aware that, in combination with the examples described in the examples disclosed in this specification, units and algorithm steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this example of this application, division of function modules may be performed on the base station based on the foregoing method examples. For example, each function module may be obtained through division based on a corresponding function, or two or more functions may be integrated into one processing module. The integrated module may be implemented in a form of hardware, or may be implemented in a form of a software function module. It should be noted that module division in the examples of this application is an example, and is merely a logical function division. In actual implementation, another division manner may be used. An example in which function modules are divided based on functions is used below for description.

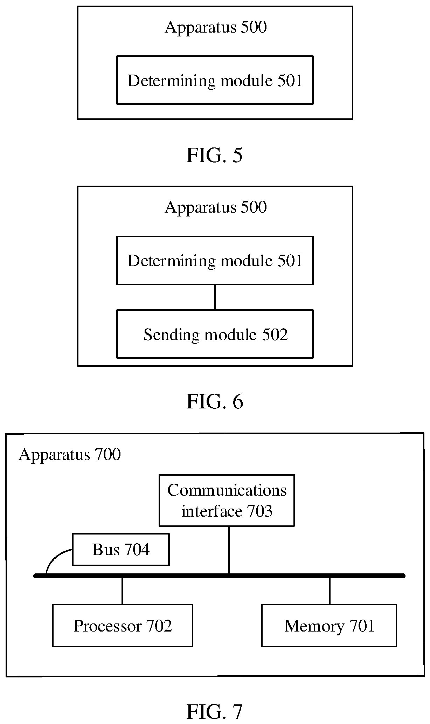

FIG. 5 is a schematic diagram of a logical structure of an apparatus 500 according to an example of this application. The apparatus 500 may be a base station, and can implement functions of the base station in the method provided in the examples of this application. The apparatus 500 may also be an apparatus that can support the base station in implementing a function of the base station in the method provided in the examples of this application. The apparatus 500 may be a hardware structure, a software module, or a combination of the hardware structure and the software module. The apparatus 500 may be implemented by a chip system. In this example of this application, the chip system may include a chip, or may include a chip and another discrete component. As shown in FIG. 5, the apparatus 500 includes a determining module 501. The determining module 501 may be configured to perform S401, S402, S403, S404, S405, S407, S408, S409, S411, and S412 in FIG. 4A and FIG. 4B, and/or perform other steps described in this application. The determining module may also be referred to as a determining unit or may have another name.

With reference to FIG. 5, as shown in FIG. 6, the apparatus 500 may further include a sending module 502. The sending module 502 may be configured to perform S406 and S410 in FIG. 4A and FIG. 4B, and/or perform other steps described in this application. The sending module may also be referred to as a sending unit or may have another name.

All related content of the steps in the foregoing method examples may be cited in function descriptions of corresponding function modules. Details are not described herein again.

In this example, the apparatus 500 may be presented in a form of function modules obtained through division in an integrated manner. The "module" herein may be a specific ASIC, a circuit, a processor executing one or more software or firmware programs, a storage device, an integrated logic circuit, and/or another component that can provide the foregoing functions.

In a simple embodiment, a person skilled in the art may figure out that the apparatus 500 may be in a form shown in FIG. 7.

As shown in FIG. 7, an apparatus 700 may include: a memory 701, a processor 702, and a communications interface 703. The memory 701 is configured to store an instruction. When the apparatus 700 runs, the processor 702 executes the instruction stored in the memory 701, so that the apparatus 700 is enabled to perform the uplink transmission resource allocation method provided in the examples of this application. The memory 701, the processor 702, and the communications interface 703 are communicatively connected by using a bus 704. For a specific uplink transmission resource allocation method, refer to the foregoing descriptions and related descriptions in the accompanying drawings. Details are not described herein again. It should be noted that, in a specific implementation process, the apparatus 700 may further include other hardware components, which are not enumerated one by one in this specification. In a possible implementation, the memory 701 may be further included in the processor 702.

In an example of this application, the determining module 501 in FIG. 5 or FIG. 6 may be implemented by using the processor 702, and the sending module 502 in FIG. 6 may be implemented by using the communications interface 703.

The communications interface 703 may be a circuit, a component, an interface, a bus, a software module, a transceiver, or any other apparatus that can implement communication. The processor 702 may be a field-programmable gate array (field-programmable gate array, FPGA), an application-specific integrated circuit (application specific integrated circuit, ASIC), a system on chip (system on chip, SoC), a central processor unit (central processor unit, CPU), a network processor (network processor, NP), a digital signal processor (digital signal processor, DSP), and a micro controller unit (micro controller unit, MCU), and may also be a programmable logic device (programmable logic device, PLD) or another integrated chip. The memory 701 includes a volatile memory (volatile memory), for example, a random-access memory (random-access memory, RAM); the memory may also include a non-volatile memory (non-volatile memory), for example, a flash memory (flash memory), a hard disk drive (hard disk drive, HDD), or a solid-state drive (solid-state drive, SSD); the memory may also include a combination of the foregoing types of memories; the memory may also include any other apparatus having a storage function, for example, a circuit, a component, or a software module.

The apparatus provided in this example of this application may be configured to perform the foregoing uplink transmission resource allocation method. Therefore, for technical effects that can be achieved by the apparatus, refer to the foregoing method embodiment. Details are not described herein.

A person of ordinary skill in the art may understand that all or some of the steps of the foregoing methods may be implemented by a program instructing relevant hardware. The program may be stored in a computer-readable storage medium. The storage medium includes: a ROM, a RAM, and an optical disc.

An example of this application further provides a storage medium. The storage medium may include a memory 701.

For explanations and beneficial effects of related content in any one of the foregoing provided apparatuses, refer to the corresponding method example provided above. Details are not described herein again.

All or some of the foregoing examples may be implemented through software, hardware, firmware, or any combination thereof. When a software program is used to implement the examples all or some of the examples may be implemented in a form of a computer program product. The computer program product includes one or more computer instructions. When the computer program instructions are loaded and executed on a computer, the procedure or functions according to the embodiments of this application are all or partially generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a soft disk, a hard disk, or a magnetic tape), an optical medium (for example, a digital video disc (digital video disc, DVD), a semiconductor medium (for example, a solid-state drive (solid state disk, SSD)), or the like.

Although this application is described with reference to examples, in a process of implementing this application that claims protection, a person skilled in the art may understand and implement another variation of the disclosed examples by viewing the accompanying drawings, disclosed content, and the accompanying claims. In the claims, "comprising" does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

## Claims

1. An uplink transmission resource allocation method, wherein the method comprises: determining (S401, S402, S403) uplink data transmission grant instruction duration T1, first state transition duration T2 for a state transition from downlink to uplink transmission, and duration T3 of first uplink data transmission;
determining a target subcarrier based on the uplink data transmission grant instruction duration T1, the first state transition duration T2, and the duration of the first uplink data transmission T3, wherein the target subcarrier is determined as an available subcarrier among a plurality of available subcarriers with a minimum difference between a start slot of uplink data transmission duration and an end slot of an allocated time-frequency resource on the available subcarrier, and an available subcarrier is a subcarrier whose time-frequency resource within the first uplink data transmission duration is an idle time-frequency resource.

2. The uplink transmission resource allocation method according to claim 1, wherein before the determining duration of first uplink data transmission T3, the method further comprises: determining a quantity of subframes of the first uplink data transmission according to a user buffer status report; and
the determining duration of first uplink data transmission is specifically: determining the duration of the first uplink data transmission T3 based on the quantity of subframes of the first uplink data transmission.

3. The uplink transmission resource allocation method according to claim 1 or 2, wherein if it is determined that no target subcarrier exists, the method further comprises:
determining (S405) second state transition duration T4; and
determining the target subcarrier based on the uplink data transmission grant instruction duration T1, the second state transition duration T4, and the duration of the first uplink data transmission T3.

4. The uplink transmission resource allocation method according to claim 3, wherein if it is determined that no target subcarrier exists, the method further comprises:
determining duration of second uplink data transmission based on a quantity of subframes of the second uplink data transmission, wherein the quantity of subframes of the second uplink data transmission is equal to the quantity of subframes of the first uplink data transmission minus 1, and the quantity of subframes of the first uplink data transmission is an integer greater than 1;
determining third state transition duration, wherein the third state transition duration is an initial value of state transition duration; and
determining the target subcarrier based on the uplink data transmission grant instruction duration T1, the third state transition duration, and the duration of the second uplink data transmission.

5. The uplink transmission resource allocation method according to any one of claims 1 to 4, wherein
the determining a target subcarrier based on the uplink data transmission grant instruction duration T1, the first state transition duration T2, and the duration of the first uplink data transmission T3 comprises:
determining a quantity of available subcarriers based on the uplink data transmission grant instruction duration T1, the first state transition duration T2, and the duration of the first uplink data transmission T3; and
determining the target subcarrier from the available subcarriers.

6. The uplink transmission resource allocation method according to claim 5, wherein that it is determined that no target subcarrier exists comprises: determining that the quantity of the available subcarriers is 0.

7. The uplink transmission resource allocation method according to any one of claims 1 to 6, wherein after the determining the target subcarrier, the method further comprises:
sending (S406) an uplink data transmission grant instruction to user equipment UE, wherein the uplink data transmission grant instruction comprises the uplink data transmission grant instruction duration T1, the first state transition duration T2, uplink data transmission duration indication information, and the corresponding target subcarrier, wherein the uplink data transmission duration indication information is used to determine the first uplink data transmission duration T3.

8. An uplink transmission resource allocation apparatus (500, 700), comprising:
a determining module (501), configured to determine uplink data transmission grant instruction duration T1, first state transition duration T2 for a state transition from downlink to uplink transmission, and duration of first uplink data transmission T3, wherein
the determining module (501) is further configured to determine a target subcarrier based on the uplink data transmission grant instruction duration T1, the first state transition duration T2, and the duration of the first uplink data transmission T3, wherein the target subcarrier is determined as an available subcarrier among a plurality of available subcarriers with a minimum difference between a start slot of uplink data transmission duration T1 and an end slot of an allocated time-frequency resource on the available subcarrier, and the available subcarrier is a subcarrier whose time-frequency resource within the first uplink data transmission duration is an idle time-frequency resource.

9. The uplink transmission resource allocation apparatus (500, 700) according to claim 8, wherein
the determining module (501) is further configured to: before the determining duration of first uplink data transmission T3, determine a quantity of subframes of the first uplink data transmission according to a user buffer status report; and
the determining module (501) is further specifically configured to determine the duration T3 of the first uplink data transmission based on the quantity of subframes of the first uplink data transmission.

10. The uplink transmission resource allocation apparatus (500, 700) according to claim 8 or 9, wherein
the determining module (501) is configured to determine whether the target subcarrier exists; and
the determining module (501) is further configured to determine second state transition duration T4 if it is determined that no target subcarrier exists, and determine the target subcarrier based on the uplink data transmission grant instruction duration T1, the second state transition duration T4 and the duration of the first uplink data transmission T3.

11. The uplink transmission resource allocation apparatus (500, 700) according to claim 10, wherein
the determining module (501) is further configured to: if it is determined that no target subcarrier exists, determine duration T4 of second uplink data transmission based on a quantity of subframes of the second uplink data transmission, wherein the quantity of subframes of the second uplink data transmission is equal to the quantity of subframes of the first uplink data transmission minus 1, and the quantity of subframes of the first uplink data transmission is an integer greater than 1;
the determining module (501) is further configured to determine third state transition duration, wherein the third state transition duration is an initial value of state transition duration; and
the determining module (501) is further configured to determine the target subcarrier based on the uplink data transmission grant instruction duration T1, the third state transition duration, and the duration of the second uplink data transmission.

12. The uplink transmission resource allocation apparatus (500, 700) according to any one of claims 8 to 11, wherein that the determining module (501) determines the target subcarrier based on the uplink data transmission grant instruction duration T1, the first state transition duration T2, and the duration of the first uplink data transmission T3 specifically comprises:
determining, by the determining module (501), a quantity of available subcarriers based on the uplink data transmission grant instruction duration T1, the first state transition duration T2, and the duration of the first uplink data transmission T3; and
determining, by the determining module (501), the target subcarrier from the available subcarriers.

13. The uplink transmission resource allocation apparatus (500, 700) according to claim 12, wherein that the determining module (501) determines that no target subcarrier exists specifically comprises: determining that the quantity of the available subcarriers is 0.

14. The uplink transmission resource allocation apparatus (500, 700) according to any one of claims 8 to 13, wherein the apparatus (500, 700) further comprises a sending module (502), wherein
the sending module (502) is configured to send an uplink data transmission grant instruction to user equipment UE after the determining module (501) determines the target subcarrier, wherein the uplink data transmission grant instruction comprises the uplink data transmission grant instruction duration T1, the first state transition duration T2, uplink data transmission duration indication information, and the corresponding target subcarrier, wherein the uplink data transmission duration indication information is used to determine the first uplink data transmission duration T3.

15. A computer-readable storage medium configured to store a computer execution instruction; which when executed by a computer causes the computer to perform the uplink transmission resource allocation method according to any one of claims 1 to 7.

## Patentansprüche

1. Verfahren zur Zuweisung von Uplink-Übertragungsressourcen, wobei das Verfahren umfasst: Bestimmen (S401, S402, S403) einer Uplink-Datenübertragungsfreigabeanweisungsdauer T1, einer ersten Zustandsübergangsdauer T2 für einen Zustandsübergang von Downlink- zu Uplink-Übertragung und einer Dauer T3 der ersten Uplink-Datenübertragung;
Bestimmen eines Ziel-Unterträgers basierend auf der Uplink-Datenübertragungsfreigabeanweisungsdauer T1, der ersten Zustandsübergangsdauer T2 und der Dauer der ersten Uplink-Datenübertragung T3, wobei der Ziel-Unterträger als ein verfügbarer Unterträger unter einer Mehrzahl von verfügbaren Unterträgern mit einer Mindestdifferenz zwischen einem Anfangsschlitz einer Uplink-Datenübertragungsdauer und einem Endschlitz einer zugewiesenen Zeit-Frequenz-Ressource auf dem verfügbaren Unterträger bestimmt wird, und ein verfügbarer Unterträger ein Unterträger ist, dessen Zeit-Frequenz-Ressource innerhalb der ersten Uplink-Datenübertragungsdauer eine freie Zeit-Frequenz-Ressource ist.

2. Verfahren zur Zuweisung von Uplink-Übertragungsressourcen nach Anspruch 1, wobei das Verfahren vor dem Bestimmen der Dauer der ersten Uplink-Datenübertragung T3 ferner umfasst: Bestimmen einer Menge von Unterrahmen der ersten Uplink-Datenübertragung gemäß einem Benutzerpufferstatusbericht; und
das Bestimmen der Dauer der ersten Uplink-Datenübertragung insbesondere umfasst: Bestimmen der Dauer der ersten Uplink-Datenübertragung T3 basierend auf der Menge von Unterrahmen der ersten Uplink-Datenübertragung.

3. Verfahren zur Zuweisung von Uplink-Übertragungsressourcen nach Anspruch 1 oder 2, wobei das Verfahren, falls bestimmt wird, dass kein Ziel-Unterrahmen vorhanden ist, ferner umfasst:
Bestimmen (S405) einer zweiten Zustandsübergangsdauer T4; und
Bestimmen des Ziel-Unterträgers basierend auf der Uplink-Datenübertragungsfreigabeanweisungsdauer T1, der zweiten Zustandsübergangsdauer T4 und der Dauer der ersten Uplink-Datenübertragung T3.

4. Verfahren zur Zuweisung von Uplink-Übertragungsressourcen nach Anspruch 3, wobei das Verfahren, falls bestimmt wird, dass kein Ziel-Unterrahmen vorhanden ist, ferner umfasst:
Bestimmen einer Dauer einer zweiten Uplink-Datenübertragung basierend auf einer Menge von Unterrahmen der zweiten Uplink-Datenübertragung, wobei die Menge von Unterrahmen der zweiten Uplink-Datenübertragung gleich der Menge von Unterrahmen der ersten Uplink-Datenübertragung minus 1 ist, und die Menge von Unterrahmen der ersten Uplink-Datenübertragung eine ganze Zahl größer als 1 ist;
Bestimmen einer dritten Zustandsübergangsdauer, wobei die dritte Zustandsübergangsdauer ein Anfangswert der Zustandsübergangsdauer ist; und
Bestimmen des Ziel-Unterträgers basierend auf der Uplink-Datenübertragungsfreigabeanweisungsdauer T1, der dritten Zustandsübergangsdauer und der Dauer der zweiten Uplink-Datenübertragung.

5. Verfahren zur Zuweisung von Uplink-Übertragungsressourcen nach einem der Ansprüche 1 bis 4, wobei
das Bestimmen eines Ziel-Unterträgers basierend auf der Uplink-Datenübertragungsfreigabeanweisungsdauer T1, der ersten Zustandsübergangsdauer T2 und der Dauer der ersten Uplink-Datenübertragung T3 umfasst:
Bestimmen einer Menge verfügbarer Unterträger basierend auf der Uplink-Datenübertragungsfreigabeanweisungsdauer T1, der ersten Zustandsübergangsdauer T2 und der Dauer der ersten Uplink-Datenübertragung T3; und
Bestimmen des Ziel-Unterträgers aus den verfügbaren Unterträgern.

6. Verfahren zur Zuweisung von Uplink-Übertragungsressourcen nach Anspruch 5, wobei, dass bestimmt wird, dass kein Ziel-Unterrahmen vorhanden ist, umfasst:
Bestimmen, dass die Menge der verfügbaren Unterträger 0 beträgt.

7. Verfahren zur Zuweisung von Uplink-Übertragungsressourcen nach einem der Ansprüche 1 bis 6, wobei das Verfahren nach dem Bestimmen des Ziel-Unterträgers ferner umfasst:
Senden (S406) einer Uplink-Datenübertragungsfreigabeanweisung an eine Benutzereinrichtung, UE, wobei die Uplink-Datenübertragungsfreigabeanweisung die Uplink-Datenübertragungsfreigabeanweisungsdauer T1, die erste Zustandsübergangsdauer T2, Uplink-Datenübertragungsdauerangabeinformationen und den entsprechenden Ziel-Unterträger umfasst, wobei die Uplink-Datenübertragungsdauerangabeinformationen zum Bestimmen der ersten Uplink-Datenübertragungsdauer T3 verwendet werden.

8. Vorrichtung (500, 700) zur Zuweisung von Uplink-Übertragungsressourcen, umfassend:
ein Bestimmungsmodul (501), das zum Bestimmen einer Uplink-Datenübertragungsfreigabeanweisungsdauer T1, einer ersten Zustandsübergangsdauer T2 für einen Zustandsübergang von Downlink- zu Uplink-Übertragung und einer Dauer der ersten Uplink-Datenübertragung T3, konfiguriert ist; wobei das Bestimmungsmodul (501) ferner zum Bestimmen eines Ziel-Unterträgers basierend auf der Uplink-Datenübertragungsfreigabeanweisungsdauer T1, der ersten Zustandsübergangsdauer T2 und der Dauer der ersten Uplink-Datenübertragung T3 konfiguriert ist, wobei der Ziel-Unterträger als ein verfügbarer Unterträger unter einer Mehrzahl von verfügbaren Unterträgern mit einer Mindestdifferenz zwischen einem Anfangsschlitz der Uplink-Datenübertragungsdauer T1 und einem Endschlitz einer zugewiesenen Zeit-Frequenz-Ressource auf dem verfügbaren Unterträger bestimmt wird, und der verfügbare Unterträger ein Unterträger ist, dessen Zeit-Frequenz-Ressource innerhalb der ersten Uplink-Datenübertragungsdauer eine freie Zeit-Frequenz-Ressource ist.

9. Vorrichtung (500, 700) zur Zuweisung von Uplink-Übertragungsressourcen nach Anspruch 8, wobei
das Bestimmungsmodul (501) ferner konfiguriert ist zum: Bestimmen einer Menge von Unterrahmen der ersten Uplink-Datenübertragung gemäß einem Benutzerpufferstatusbericht vor dem Bestimmen einer Dauer der ersten Uplink-Datenübertragung T3; und
das Bestimmungsmodul (501) ferner insbesondere zum Bestimmen der Dauer T3 der ersten Uplink-Datenübertragung basierend auf der Menge von Unterrahmen der ersten Uplink-Datenübertragung konfiguriert ist.

10. Vorrichtung (500, 700) zur Zuweisung von Uplink-Übertragungsressourcen nach Anspruch 8 oder 9, wobei
das Bestimmungsmodul (501) zum Bestimmen konfiguriert ist, ob der Ziel-Unterträger vorhanden ist; und
das Bestimmungsmodul (501) ferner so konfiguriert ist, dass es die zweite Zustandsübergangsdauer T4 bestimmt, falls bestimmt wird, dass kein Ziel-Unterrahmen vorhanden ist, und den Ziel-Unterträger basierend auf der Uplink-Datenübertragungsfreigabeanweisungsdauer T1, der zweiten Zustandsübergangsdauer T4 und der Dauer der ersten Uplink-Datenübertragung T3 bestimmt.

11. Vorrichtung (500, 700) zur Zuweisung von Uplink-Übertragungsressourcen nach Anspruch 10, wobei
das Bestimmungsmodul (501) ferner konfiguriert ist zum: Bestimmen einer Dauer T4 einer zweiten Uplink-Datenübertragung basierend einer Menge von Unterrahmen der zweiten Uplink-Datenübertragung, falls bestimmt wird, dass kein Ziel-Unterrahmen vorhanden ist, wobei die Menge von Unterrahmen der zweiten Uplink-Datenübertragung gleich der Menge von Unterrahmen der ersten Uplink-Datenübertragung minus 1 ist und die Menge von Unterrahmen der ersten Uplink-Datenübertragung eine ganz Zahl größer als 1 ist;
das Bestimmungsmodul (501) ferner zum Bestimmen einer dritten Zustandsübergangsdauer konfiguriert ist, wobei die dritte Zustandsübergangsdauer ein Anfangswert der Zustandsübergangsdauer ist; und
das Bestimmungsmodul (501) ferner zum Bestimmen des Ziel-Unterträgers basierend auf der Uplink-Datenübertragungsfreigabeanweisungsdauer T1, der dritten Zustandsübergangsdauer und der Dauer der zweiten Uplink-Datenübertragung konfiguriert ist.

12. Vorrichtung (500, 700) zur Zuweisung von Uplink-Übertragungsressourcen nach einem der Ansprüche 8 bis 11, wobei, dass das Bestimmungsmodul (501) den Ziel-Unterträger basierend auf der Uplink-Datenübertragungsfreigabeanweisungsdauer T1, der ersten Zustandsübergangsdauer T2 und der Dauer der ersten Uplink-Datenübertragung T3 bestimmt, insbesondere umfasst:
Bestimmen einer Menge verfügbarer Unterträger durch das Bestimmungsmodul (501) basierend auf der Uplink-Datenübertragungsfreigabeanweisungsdauer T1, der ersten Zustandsübergangsdauer T2 und der Dauer der ersten Uplink-Datenübertragung T3; und
Bestimmen des Ziel-Unterträgers durch das Bestimmungsmodul (501) aus den verfügbaren Unterträgern.

13. Vorrichtung (500, 700) zur Zuweisung von Uplink-Übertragungsressourcen nach Anspruch 12, wobei, dass das Bestimmungsmodul (501) bestimmt, dass kein Ziel-Unterrahmen vorhanden ist, insbesondere umfasst: Bestimmen, dass die Menge der verfügbaren Unterträger 0 beträgt.

14. Vorrichtung (500, 700) zur Zuweisung von Uplink-Übertragungsressourcen nach einem der Ansprüche 8 bis 13, wobei die Vorrichtung (500, 700) ferner ein Sendemodul (502) umfasst, wobei
das Sendemodul (502) so konfiguriert ist, dass es nach dem Bestimmen des Ziel-Unterträgers durch das Bestimmungsmodul (501) eine Uplink-Datenübertragungsfreigabeanweisung an eine Benutzereinrichtung, UE, sendet, wobei die Uplink-Datenübertragungsfreigabeanweisung die Uplink-Datenübertragungsfreigabeanweisungsdauer T1, die erste Zustandsübergangsdauer T2, Uplink-Datenübertragungsdauerangabeinformationen und den entsprechenden Ziel-Unterträger umfasst, wobei die Uplink-Datenübertragungsdauerangabeinformationen zum Bestimmen der ersten Uplink-Datenübertragungsdauer T3 verwendet werden.

15. Computerlesbares Speichermedium, das zum Speichern einer Computerausführungsanweisung konfiguriert ist, die bei Ausführung durch einen Computer den Computer zum Durchführen des Verfahrens zur Zuweisung von Uplink-Übertragungsressourcen nach einem der Ansprüche 1 bis 7 veranlasst.

## Revendications

1. Procédé d'attribution de ressources de transmission en liaison montante, le procédé comprenant les étapes consistant à : déterminer (S401, S402, S403) une durée d'instruction d'autorisation de transmission de données en liaison montante T1, une première durée de transition d'états T2 pour une transition d'états d'une transmission en liaison descendante à une transmission en liaison montante, et une durée T3 d'une première transmission de données en liaison montante ;
déterminer une sous-porteuse cible sur la base de la durée d'instruction d'autorisation de transmission de données en liaison montante T1, de la première durée de transition d'états T2 et de la durée de la première transmission de données en liaison montante T3, la sous-porteuse cible déterminée étant une sous-porteuse disponible d'une pluralité de sous-porteuses disponibles qui présente une différence minimale entre un créneau de début de la durée de transmission de durée en liaison montante et un créneau de fin d'une ressource temps-fréquence attribuée sur la sous-porteuse disponible, et une sous-porteuse disponible étant une sous-porteuse dont la ressource temps-fréquence au cours de la première durée de transmission de données en liaison montante est une ressource temps-fréquence inactive.

2. Procédé d'attribution de ressources de transmission en liaison montante selon la revendication 1, le procédé, avant la détermination de la durée de la première transmission de données en liaison montante T3, comprenant en outre l'étape consistant à : déterminer une quantité de sous-trames de la première transmission de données en liaison montante d'après un rapport d'état de tampon d'utilisateur ; et
la détermination de la durée de la première transmission de données en liaison montante consistant spécifiquement à : déterminer la durée de la première transmission de données en liaison montante T3 sur la base de la quantité de sous-trames de la première transmission de données en liaison montante.

3. Procédé d'attribution de ressources de transmission en liaison montante selon la revendication 1 ou 2, le procédé, s'il est déterminé qu'aucune sous-porteuse cible n'existe, comprenant en outre les étapes consistant à :
déterminer (S405) une deuxième durée de transition d'états T4 ; et
déterminer la sous-porteuse cible sur la base de la durée d'instruction d'autorisation de transmission de données en liaison montante T1, de la deuxième durée de transition d'états T4 et de la durée de la première transmission de données en liaison montante T3.

4. Procédé d'attribution de ressources de transmission en liaison montante selon la revendication 3, le procédé, s'il est déterminé qu'aucune sous-porteuse cible n'existe, comprenant en outre les étapes consistant à :
déterminer la durée de la deuxième transmission de données en liaison montante sur la base d'une quantité de sous-trames de la deuxième transmission de données en liaison montante, la quantité de sous-trames de la deuxième transmission de données en liaison montante étant égale à la quantité de sous-trames de la première transmission de données en liaison montante moins 1, et la quantité de sous-trames de la première transmission de données en liaison montante étant un entier supérieur à 1 ;
déterminer une troisième durée de transition d'états, la troisième durée de transition d'états étant une valeur initiale de la durée de transition d'états ; et
déterminer la sous-porteuse cible sur la base de la durée d'instruction d'autorisation de transmission de données en liaison montante T1, de la troisième durée de transition d'états et de la durée de la deuxième transmission de données en liaison montante.

5. Procédé d'attribution de ressources de transmission en liaison montante selon l'une quelconque des revendications 1 à 4, dans lequel
la détermination d'une sous-porteuse cible sur la base de la durée d'instruction d'autorisation de transmission de données en liaison montante T1, de la première durée de transition d'états T2 et de la durée de la première transmission de données en liaison montante T3 comprend les étapes consistant à :
déterminer une quantité de sous-porteuses disponibles sur la base de la durée d'instruction d'autorisation de transmission de données en liaison montante T1, de la première durée de transition d'états T2 et de la durée de la première transmission de données en liaison montante T3 ; et
déterminer la sous-porteuse cible parmi les sous-porteuses disponibles.

6. Procédé d'attribution de ressources de transmission en liaison montante selon la revendication 5, dans lequel la détermination du fait qu'aucune sous-porteuse cible n'existe comprend l'étape consistant à : déterminer que la quantité de sous-porteuses disponibles est 0.

7. Procédé d'attribution de ressources de transmission en liaison montante selon l'une quelconque des revendications 1 à 6, le procédé, après la détermination de la sous-porteuse cible, comprenant en outre l'étape consistant à :
envoyer (S406) une instruction d'autorisation de transmission de données en liaison montante à un équipement utilisateur UE, l'instruction d'autorisation de transmission de données en liaison montante comprenant la durée d'instruction d'autorisation de transmission de données en liaison montante T1, la première durée de transition d'états T2, des informations d'indication de durée de transmission de données en liaison montante et la sous-porteuse cible correspondante, les informations d'indication de durée de transmission de données en liaison montante servant à déterminer la durée de première transmission de données en liaison montante T3.

8. Appareil d'attribution de ressources de transmission en liaison montante (500, 700), comprenant :
un module de détermination (501), configuré pour déterminer une durée d'instruction d'autorisation de transmission de données en liaison montante T1, une première durée de transition d'états T2 pour une transition d'états d'une transmission en liaison descendante à une transmission en liaison montante, et une durée d'une première transmission de données en liaison montante T3,
le module de détermination (501) étant en outre configuré pour déterminer une sous-porteuse cible sur la base de la durée d'instruction d'autorisation de transmission de données en liaison montante T1, de la première durée de transition d'états T2 et de la durée de la première transmission de données en liaison montante T3, la sous-porteuse cible déterminée étant une sous-porteuse disponible d'une pluralité de sous-porteuses disponibles qui présente une différence minimale entre un créneau de début de la durée de transmission de durée en liaison montante T1 et un créneau de fin d'une ressource temps-fréquence attribuée sur la sous-porteuse disponible, et la sous-porteuse disponible étant une sous-porteuse dont la ressource temps-fréquence au cours de la première durée de transmission de données en liaison montante est une ressource temps-fréquence inactive.

9. Appareil d'attribution de ressources de transmission en liaison montante (500, 700) selon la revendication 8, dans lequel
le module de détermination (501) esten outre en outre configuré pour : avant la détermination de la durée de la première transmission de données en liaison montante T3, déterminer une quantité de sous-trames de la première transmission de données en liaison montante d'après un rapport d'état de tampon d'utilisateur ; et
le module de détermination (501) est en outre configuré spécifiquement pour déterminer la durée T3 de la première transmission de données en liaison montante sur la base de la quantité de sous-trames de la première transmission de données en liaison montante.

10. Appareil d'attribution de ressources de transmission en liaison montante (500, 700) selon la revendication 8 ou 9, dans lequel
le module de détermination (501) est configuré pour déterminer si la sous-porteuse cible existe ; et
le module de détermination (501) est en outre configuré pour déterminer une deuxième durée de transition d'états T4 s'il est déterminé qu'aucune sous-porteuse cible n'existe, et déterminer la sous-porteuse cible sur la base de la durée d'instruction d'autorisation de transmission de données en liaison montante T1, de la deuxième durée de transition d'états T4 et de la durée de la première transmission de données en liaison montante T3.

11. Appareil d'attribution de ressources de transmission en liaison montante (500, 700) selon la revendication 10, dans lequel
le module de détermination (501) est en outre configuré pour : s'il est déterminé qu'aucune sous-porteuse cible n'existe, déterminer la durée T4 de la deuxième transmission de données en liaison montante sur la base d'une quantité de sous-trames de la deuxième transmission de données en liaison montante, la quantité de sous-trames de la deuxième transmission de données en liaison montante étant égale à la quantité de sous-trames de la première transmission de données en liaison montante moins 1, et la quantité de sous-trames de la première transmission de données en liaison montante étant un entier supérieur à 1 ;
le module de détermination (501) est en outre configuré pour déterminer une troisième durée de transition d'états, la troisième durée de transition d'états étant une valeur initiale de la durée de transition d'états ; et
le module de détermination (501) est en outre configuré pour déterminer la sous-porteuse cible sur la base de la durée d'instruction d'autorisation de transmission de données en liaison montante T1, de la troisième durée de transition d'états et de la durée de la deuxième transmission de données en liaison montante.

12. Appareil d'attribution de ressources de transmission en liaison montante (500, 700) selon l'une quelconque des revendications 8 à 11, dans lequel le fait que le module de détermination (501) détermine la sous-porteuse cible sur la base de la durée d'instruction d'autorisation de transmission de données en liaison montante T1, de la première durée de transition d'états T2 et de la durée de la première transmission de données en liaison montante T3 comprend spécifiquement les étapes consistant à :
déterminer, par le module de détermination (501), une quantité de sous-porteuses disponibles sur la base de la durée d'instruction d'autorisation de transmission de données en liaison montante T1, de la première durée de transition d'états T2 et de la durée de la première transmission de données en liaison montante T3 ; et
déterminer, par le module de détermination (501), la sous-porteuse cible parmi les sous-porteuses disponibles.

13. Appareil d'attribution de ressources de transmission en liaison montante (500, 700) selon la revendication 12, dans lequel le fait que le module de détermination (501) détermine qu'aucune sous-porteuse cible n'existe comprend spécifiquement l'étape consistant à : déterminer que la quantité de sous-porteuses disponibles est 0.

14. Appareil d'attribution de ressources de transmission en liaison montante (500, 700) selon l'une quelconque des revendications 8 à 13, l'appareil (500, 700) comprenant en outre un module d'envoi (502),
le module d'envoi (502) étant configuré pour envoyer une instruction d'autorisation de transmission de données en liaison montante à un équipement utilisateur UE après que le module de détermination (501) a déterminé la sous-porteuse cible, l'instruction d'autorisation de transmission de données en liaison montante comprenant la durée d'instruction d'autorisation de transmission de données en liaison montante T1, la première durée de transition d'états T2, des informations d'indication de durée de transmission de données en liaison montante et la sous-porteuse cible correspondante, les informations d'indication de durée de transmission de données en liaison montante servant à déterminer la durée de première transmission de données en liaison montante T3.

15. Support de stockage lisible par ordinateur configuré pour stocker une instruction à exécuter sur ordinateur ; laquelle, lorsqu'elle est exécutée par un ordinateur, amène l'ordinateur à effectuer le procédé d'attribution de ressources de transmission en liaison montante selon l'une quelconque des revendications 1 à 7.
